# EUROPEAN PATENT APPLICATION

(11) **EP 2 495 118 A2**
(43) Date of publication of application: **05.09.2012**
(21) Application number: 12157669.8
(22) Date of filing: 01.03.2012
(51) Int. Cl.: B60H 1/00

(54) **Vehicle air conditioner**

(30) Priority: 02.03.2011 JP 2011045200
(71) Applicant: KABUSHIKI KAISHA TOYOTA JIDOSHOKKI, Kariya-shi Aichi 448-8671 (JP)
(72) Inventor: Ban, Takahisa, Kariya-shi, Aichi 448-8671 (JP); Murase, Masakazu, Kariya-shi, Aichi 448-8671 (JP); Yokomachi, Naoya, Kariya-shi, Aichi 448-8671 (JP)
(74) Representative: TBK

(57) **Abstract**

A vehicle air conditioner for a passenger compartment includes a power source (3), a radiator (5) provided outside the passenger compartment, a heat medium passage (7,9) through which heat medium is circulated between the power source and the radiator, a first peltier module (11) having a first peltier device and a first heat exchanger, and a second peltier module (13) having a second peltier device and a second heat exchanger. The first and second peltier devices each has a first surface and a second surface, one of the first surface and the second surface serves to release heat, the other of the first surface and the second surface serves to absorb heat. The first heat exchanger is thermally coupled to the first surface. The second heat exchanger is thermally coupled to the first surface. The heat medium passage is thermally coupled to the second surfaces of the first and second peltier devices.

## Description

### BACKGROUND OF THE INVENTION

### The present invention relates to a vehicle air conditioner.

Japanese Unexamined PatentApplication Publication No. 10-35268 discloses a vehicle air conditioner including a waste heat collector, a radiator, a peltier module, and a heat medium passage through which water as a heat medium is circulated.

The waste heat collector functions to collect waste heat from a vehicle power source such as an electric motor. The peltier module has a peltier device with a first and a second surface one of which serves as heat releasing surface and the other of which serves as heat absorbing surface, a first heat exchanger thermally coupled to the first surface of the peltier device, and a second heat exchanger thermally coupled to the second surface of the peltier device. The heat medium passage connects the waste heat collector, the radiator, and the second heat exchanger of the peltier module.

In the air conditioner, air conditioning of vehicle passenger compartment is done by switching the heat releasing and absorbing surfaces of the peltier device and also changing the water flow path in the heat medium passage.

Specifically, when heating the passenger compartment, the peltier device is operated so that the first surface serves as the heat releasing surface and the second surface serves as the heat absorbing surface. The waste heat collector is connected to the second heat exchanger, while the second heat exchanger and the waste heat collector are disconnected from the radiator. Water flowing in the heat medium passage is heated by the heat in the waste heat collector. Heat of the water is absorbed through the second heat exchanger in the second surface of the peltier device. The heat thus absorbed is radiated from the first heat exchanger into the surrounding air. Then the heated air is supplied to the passenger compartment, so that heating of the passenger compartment is accomplished.

When cooling the passenger compartment, the peltier device is operated so that the first surface serves as the heat absorbing surface and the second surface serves as the heat releasing surface. The radiator is connected to the second heat exchanger, while the second heat exchanger and the radiator are disconnected from the waste heat collector. Heat is absorbed through the first heat exchanger in the first surface of the peltier device and the air around the first exchanger is cooled. The cooled air is supplied to the passenger compartment, so that cooling of the passenger compartment is accomplished. The water in the heat medium passage is heated by the second heat exchanger to which heat is released from the peltier device, and then cooled in the radiator by heat exchange with the air outside the passenger compartment.

Another known air conditioner is disclosed in Japanese Unexamined Patent Application Publication No. 2010-195287. The air conditioner includes a radiator, a first peltier module, a second peltier module, and a heat medium passage through which water is circulated. The heat medium passages connects the radiator, the first peltier module and the second peltier module.

When heating the passenger compartment by the air conditioner, the first peltier module is operated so as to absorb heat from the water flowing in the heat medium passage and also release heat to the surrounding air. The heated air is supplied to the passenger compartment, so that heating of the passenger compartment is accomplished.

When cooling, the second peltier module and the radiator are operated so that the second peltier module releases heat to the water flowing in the heat medium passage and also absorbs heat from the surrounding air. The cooled air is supplied to the passenger compartment, so that cooling of the passenger compartment is accomplished.

When dehumidifying, the first and second peltier modules and the radiator are operated. Air is cooled and dehumidified by the second peltier module, and then the cooled air is heated by the first peltier module. The air at appropriately adjusted temperature is supplied to the passenger compartment, so that dehumidifying of the passenger compartment is accomplished.

The air conditioner disclosed in the publication No. 10-35268 is complex in structure and large in size, which is disadvantageous in the installation in a vehicle. In addition, since the air cooled by the peltier module cannot be re-heated, the dehumidification causes a decrease in the efficiency of heating the compartment.

In the air conditioner disclosed in the publication No. 2010-195287, on the other hand, although the dehumidification does not necessarily cause a decrease in the efficiency of cooling the compartment, the air conditioner requires an additional radiator for releasing heat from a vehicle power source. The provision of plural radiators results in an increased size of the air conditioner, which prevents easy installation of the air conditioner in a vehicle.

The present invention is directed to providing a vehicle air conditioner that allows efficient air conditioning of a passenger compartment and easy installation in a vehicle.

### SUMMARY OF THE INVENTION

In accordance with an aspect of the present invention, a vehicle air conditioner for a passenger compartment of a vehicle includes a power source for driving the vehicle, a radiator provided outside the passenger compartment, a heat medium passage through which heat medium is circulated between the power source and the radiator, a first peltier module having a first peltier device and a first heat exchanger, and a second peltier module having a second peltier device and a second heat exchanger. The first peltier device has a first surface and a second surface, one of the first surface and the second surface serves to release heat, the other of the first surface and the second surface serves to absorb heat. The first heat exchanger is thermally coupled to the first surface. The second peltier device has a first surface and a second surface, one of the first surface and the second surface serves to release heat, the other of the first surface and the second surface serves to absorb heat. The second heat exchanger is thermally coupled to the first surface. The heat medium passage is thermally coupled to the second surface of the first peltier device and the second surface of the second peltier device.

Other aspects and advantages of the invention will become apparent from the following description, taken in conjunction with the accompanying drawings, illustrating by way of example the principles of the invention.

### BRIEF DESCRIPTION OF THE DRAWINGS

Fig. 1 is a schematic view of a vehicle air conditioner according to an embodiment of the present invention;
Fig. 2 is an enlarged fragmentary view of the air conditioner of Fig. 1;
Fig. 3 is a schematic view explaining the operation of the air conditioner of Fig. 1 when heating a vehicle passenger compartment; and
Fig. 4 is similar to Fig. 3, but explaining the operation of the air conditioner when dehumidifying the passenger compartment by re-heating the cooled air.

### DETAILED DESCRIPTION OF THE EMBODIMENTS

The following will describe the embodiment of the vehicle air conditioner according to the present invention with reference to the accompanying drawings. The air conditioner of the embodiment is intended for use in a vehicle for providing heating, cooling and dehumidifying of a passenger compartment of the vehicle.

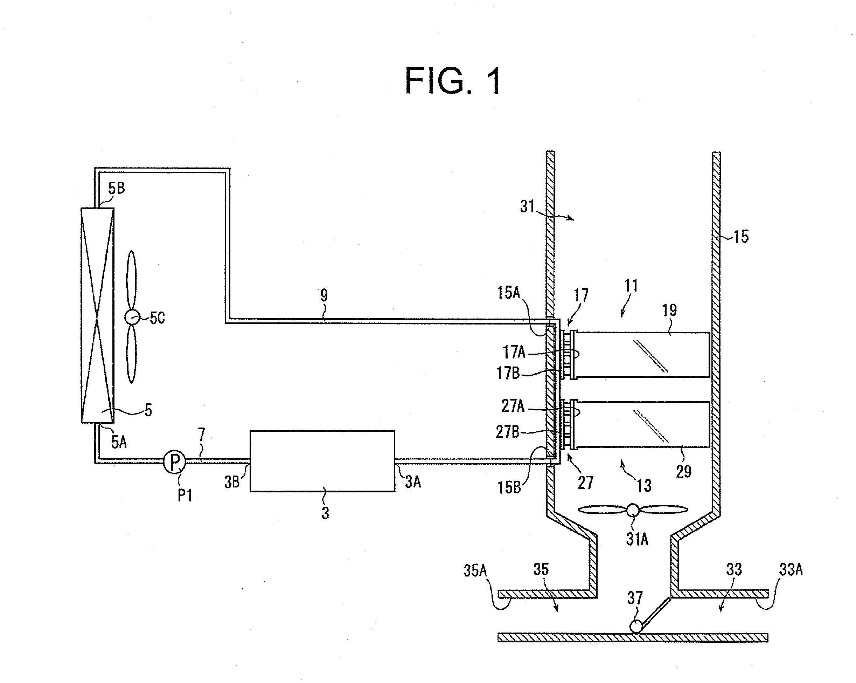

Referring to Fig. 1, the air conditioner includes an engine 3, a radiator 5, tubes 7, 9, a first peltier module 11, and a second peltier module 13. The first and second peltier modules 11, 13 are provided in a duct 15 that is in communication with the passenger compartment.

The engine 3 is the power source for driving the vehicle. Although not shown in the drawing, the engine 3 has a water jacket where engine coolant flows for cooling the engine 3. The engine 3 has an Inlet 3A and an outlet 3B through which engine coolant flows into and out of the water jacket. The engine 3 may be replaced by an electric motor or a driver circuit such as power control unit (PCU). Alternatively, the engine 3 combined with such electric motor or PCU may be used as the power source.

The radiator 5 is a device where engine coolant flows and is cooled by heat exchange with the surrounding air. The radiator 5 has an Inlet 5A and an outlet 5B through which engine coolant flows into and out of the radiator 5. An electrically operated fan 5C is provided adjacent to the radiator 5 and electrically connected to a controller (not shown). Engine coolant corresponds to the heat medium of the present invention.

The engine 3 and the radiator 5 are connected by the tubes 7, 9. Specifically, the tube 7 connects between the outlet 3B of the engine 3 and the inlet 5A of the radiator 5, and the tube 9 connects between the outlet 5B of the radiator 5 and the inlet 3A of the engine 3. Engine coolant is circulated between the engine 3 and the radiator 5A through the tubes 7, 9. An electrically operated pump P1 is provided in the tube 7 and electrically connected to the aforementioned controller. The pump P1 may be provided in the tube 9. The tubes 7, 9 correspond to the heat medium passage of the present invention.

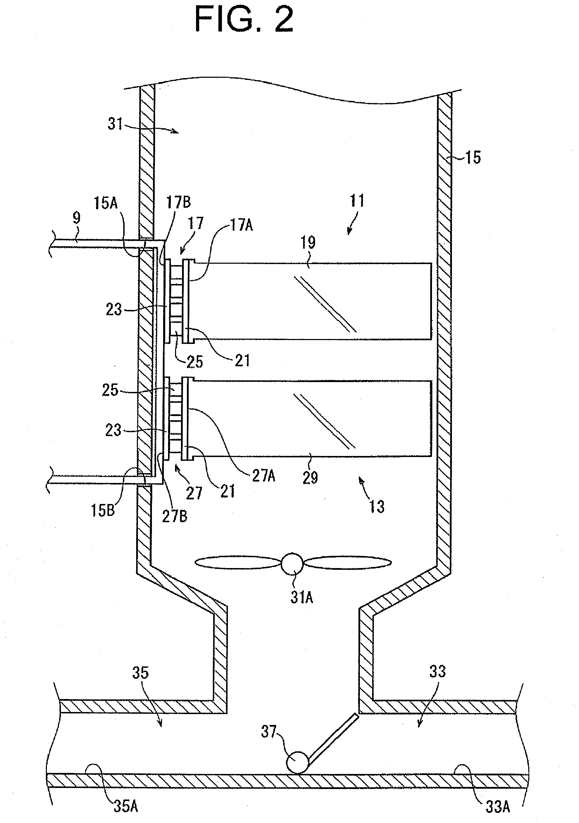

Referring to Fig. 2, the first peltier module 11 has a first peltier device 17 and a first fin 19. The first peltier device 17 has a first insulated substrate 21, a second insulated substrate 23, and plural thermoelectric transducers 25 held between the first and second insulated substrates 21, 23. In the first peltier device 17, the first insulated substrate 21 forms a first surface 17 A from which heat is released, and the second insulated substrate 23 forms a second surface 17B in which heat is absorbed. The first peltier device 17 is electrically connected to the controller. The first peltier device 17 is fixed at the first surface 17Ato the first fin 19 in a thermally coupled manner, and disposed in contact at the second surface 17B with the tube 9 so that the first peltier module 11 is thermally coupled to the tube 9.

The first fin 19 is formed by a plurality of heat radiation plates extending along the direction of air.flow in the duct 15 so as to provide a large surface area exposed to the air, specifically, to the outdoor air and the indoor air flowing through the duct 15, while lowering the air flow resistance. In the duct 15, heat exchange occurs between the heat radiation plates of the first fin 19 and outdoor or indoor air. The first fin 19 is provided, for example, by a corrugated fin.

The second peltier module 13 has a second peltier device 27 and a second fin 29. As with the first peltier device 17, the second peltier device 27 has a first insulated substrate 21, a second insulated substrate 23, and plural thermoelectric transducers 25 held between the first and second insulated substrates 21, 23. In the second peltier device 27, the first insulated substrate 21 forms a first surface 27A in which heat is absorbed, and the second insulated substrate 23 forms a second surface 27B from which heat is released. The second peltier device 27 is electrically connected to the controller. The second peltier device 27 is fixed at the first surface 27A to the second fin 29 in a thermally coupled manner, and disposed in contact at the second surface 27B with the tube 9 so that the second peltier module 13 is thermally coupled to the tube 9.

The second fin 29 has a structure similar to that of the first fin 19 and also may be provided by a corrugated fin. The first and second fins 19, 29 correspond to the first and second heat exchangers, respectively, of the present invention.

The duct 15 has a cylindrical main portion 31 and two cylindrical branch portions 33, 35 branched from the main portion 31 at the upstream end thereof as seen in the air flow direction in the duct 15. The end of the branch portion 33 remote from the branch forms an indoor air inlet 33A that is opened to the passenger compartment of the vehicle, and the end of the branch portion 35 remote from the branch forms an outdoor air inlet 35A that is opened to the outdoor air outside the vehicle. An electrically operated flapper 37 is provided in the part of the duct 15 where the branch portions 33, 35 are joined. The main portion 31 is provided therein with an electrically operated fan 31Aand in communication at the downstream side thereof with the passenger compartment. The fan 31A and the flapper 37 are electrically connected to the controller. The flapper 37, which corresponds to the selector of the present invention, may be replaced by any suitable valves that are operable to open and close the respective indoor and outdoor air inlets 33A, 35A with respect to the main portion 31 of the duct 15.

The first and second peltier modules 11, 13 are provided in the main portion 31 of the duct 15 in a manner that the first and second peltier modules 11, 13 are thermally coupled to the tube 9. The second peltier module 13 is provided downstream of the first peltier module 11 as seen in the engine coolant flowing direction in the tube 9. The main portion 31 of the duct 15 has holes 15A, 15B through which the tube 9 is inserted.

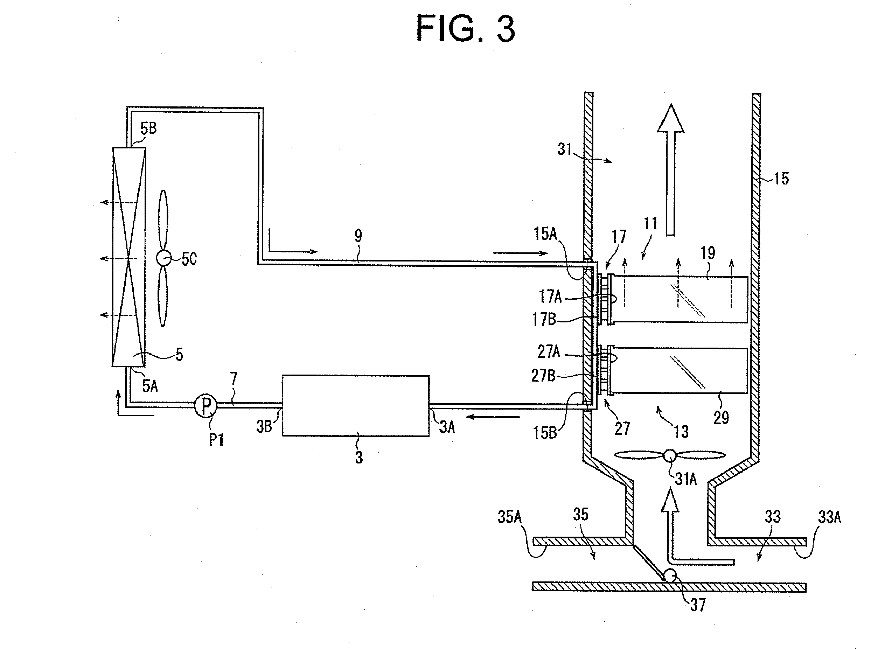

In the above-described vehicle air conditioner, while the engine 3 is operating, the pump P1 and the fan 5C are operated by the controller so that engine coolant is circulated through the tubes 7, 9 in the direction indicated by arrows in Fig. 3. Engine coolant heated by the waste heat of the engine 3 flows from the outlet 3B of the engine 3, flowing through the tube 7 and then into the inlet 5A of the radiator 5. Heat exchange occurs between the engine coolant flowing in the radiator 5 and the air around the radiator 5, so that the heat of the engine coolant is radiated by the aid of the fan 5C into the air outside the passenger compartment. The engine coolant thus cooled in the radiator 5 then flows from the outlet 5B of the radiator 5 through the tube 9 and into the inlet 3A of the engine 3, cooling the engine 3. While the engine 3 is operating, the air conditioner of the present embodiment provide heating, cooling and dehumidifying of the passenger compartment of the vehicle as described below.

When heating the passenger compartment, the first peltier device 17 of the first peltier module 11 is operated by the controller. The flapper 37 and the fan 31A are also operated by the controller so that the main portion 31 of the duct 15 is connected to the branch portion 33 but disconnected from the branch portion 35, as shown in Fig. 3, and indoor air is introduced into the main portion 31. In this case, the second surface 17B or heat absorbing surface of the first peltier device 17 absorbs heat from the engine coolant flowing in the tube 9, while the first surface 17A or heat releasing surface of the first peltier device 17 releases heat to the first fin 19. As a result, the first fin 19 is heated, and the indoor air in contact with the heated first fin 19 in the main portion 31 is heated, accordingly. The indoor air existing in the passenger compartment has a higher temperature than the outdoor air, and the indoor air is efficiently heated by the first fin 19. Heated indoor air is supplied by the fan 31A through the duct 15 to the passenger compartment. In this way, heating of the passenger compartment is done.

The engine coolant flowing in the tube 9 and cooled by the first peltier device 17 flows into the engine 3 through its inlet 3A to be used to cool the engine 3. In the air conditioner of the present embodiment wherein the engine 3 is located downstream of the first peltier module 11 as seen in the engine coolant flowing direction in the tubes 7, 9, the engine 3 can be cooled by the engine coolant cooled by the first peltier device 17 as well as by the radiator 5. In other word, the engine 3 can be efficiently cooled by utilizing the waste heat of the first peltier module 11 during the heating operation of the air conditioner.

When cooling the passenger compartment, the second peltier device 27 of the second peltier module 13 is operated, and the flapper 37 and the fan 31A are operated as in the case of the above heating operation so that indoor air is introduced into the main portion 31 of the duct 15. In this case, the second surface 27B of the second peltier device 27 releases heat to the engine coolant flowing in the tube 9, while the first surface 27A of the second peltier device 27 absorbs heat from the second fin 29. As a result, the second fin 29 is cooled, and the indoor air in contact with the second fin 29 in the main portion 31 is cooled. The indoor air existing in the passenger compartment has a lower temperature than the outdoor air, and the indoor air is efficiently cooled by the second fin 29. Cooled indoor air is supplied to the passenger compartment, so that cooling of the passenger compartment is done. The engine coolant flowing in the tube 9 and receiving heat from the second peltier device 27 is used to cool the engine 3 and then cooled by the radiator 5. That is, the waste heat of the second peltier module 13 during the cooling operation is released along with the waste heat of the engine 3 into the air outside the passenger compartment.

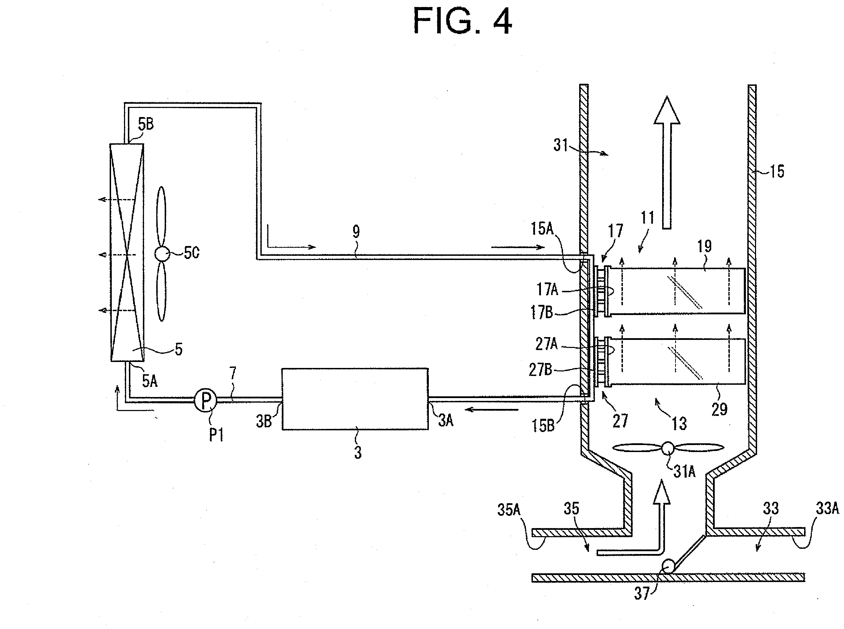

When dehumidifying the passenger compartment, both of the first and second peltier modules 11, 13 are operated by the controller, as shown in Fig. 4. The flapper 37 and the fan 31A are also operated so that the main portion 31 is connected to the branch portion 35 but disconnected from the branch portion 33 and the outdoor air is introduced into the main portion 31. In this case, the outdoor air cooled by the second fin 29 and dehumidified is in turn heated by the first fin 19 to an appropriate temperature. The outdoor air which has a lower humidity than the indoor air is efficiently cooled and dehumidified by the second fin 29. The outdoor air adjusted at an appropriate temperature is supplied to the passenger compartment for dehumidifying of the passenger compartment, as well as for appropriate air-conditioning of the passenger compartment. The engine coolant releasing heat to the first peltier device 17 and receiving heat from the second peltier device 27 while flowing in the tube 9 is introduced into the engine 3 through its inlet 3A and used to cool the engine 3. When there is no need to heat the dehumidified outdoor air, no operation of the first peltier module 11 is performed.

In the vehicle air conditioner of the present embodiment, heating and cooling of the passenger compartment can also be accomplished by using heated outdoor air and cooled outdoor air, respectively, which makes it easy to keep the humidity of the passenger compartment during the heating and cooling operation when the outdoor air has a lower humidity than the indoor air. Dehumidifying of the passenger compartment can also be accomplished by using the dehumidified indoor air. In a weather condition that the outdoor air has a higher humidity than the indoor air, the use of such dehumidified indoor air allows efficient dehumidifying of the passenger compartment and makes it easy to keep the humidity of the passenger compartment by circulating the indoor air between the main portion 31 of the duct 15 and the passenger compartment. The flapper 37 may be positioned so that both of the branch portions 33, 35 are connected to the main portion 31 of the duct 15, which allows air conditioning of the passenger compartment using the outdoor air and the indoor air mixed together in a desired mixing ratio.

As described above, according to the vehicle air conditioner of the present embodiment, there is no need to change the flow path of the engine coolant flowing in the tubes 7, 9 depending on the operating modes, including heating, cooling or dehumidifying of the passenger compartment. In the air conditioner wherein the engine 3 is connected to the tubes 7, 9 and cooled by the engine coolant flowing in the tubes 7, 9, not only the waste heat of the first and second peltier modules 11, 13 during the air conditioning, but also the waste heat of the engine 3 are transferred by the engine coolant and radiated from the radiator 5 into the air outside the passenger compartment. Thus, the air conditioner of the embodiment requires no additional radiator to cool the engine 3, which results in a smaller size of the air conditioner.

Thus, the vehicle air conditioner of the present embodiment allows efficient air conditioning of the passenger compartment and easy installation of the air conditioner in a vehicle.

Particularly in the air conditioner of the present embodiment wherein second peltier module 13 is provided downstream of the first peltier module 11 as seen in the engine coolant flowing direction in the tube 9, since the second peltier device 27 releases heat to the engine coolant that has been cooled by the first peltier device 17 when dehumidifying the vehicle passenger compartment, a larger amount of heat is absorbed in the heat absorbing surface of the second peltier device 27 and hence the second fin 29 is sufficiently cooled. The outdoor air is cooled efficiently and dehumidified sufficiently by such cooled second fin 29, resulting in efficient dehumidification of the passenger compartment. The cooled outdoor air can be re-heated by the first fin 19, which does not cause a decrease in the efficiency of air conditioning of the passenger compartment.

In the air conditioner of the present embodiment, the first and second peltier modules 11, 13 are provided in the duct 15 that is in communication with the passenger compartment. The duct 15 is provided with the flapper 37 which allows selective supply of the outdoor air or the indoor air to the passenger compartment. Efficient air conditioning of the passenger compartment is accomplished by heating, cooling or dehumidifying the outdoor or the indoor air selected as required.

It is to be understood that the present invention is not limited to the above-described embodiments, but it may be modified in various ways without departing from the scope of the invention.

For example, the engine coolant flowing through the tubes 7, 9 may be used not only to cool the engine 3 but also to cool any other component such as a battery provided in a vehicle and thermally coupled to the tubes 7, 9.

The number of the first peltier modules 11 and of the second peltier modules 13 may be two or more. The number of the first peltier module 11 and the number of the second peltier module 13 need not necessarily be the same, but they may be different from each other.

The first fin 19 and the second fin 29 may be replaced by a first heat exchanger and a second heat exchanger, respectively, through which water circulates. In such a case, the water flowing in the first heat exchanger receives heat from the first peltier device 17 and hence is heated. Outdoor air or indoor air in the main portion 31 of the duct 15 is heated by heat exchange with such heated water. Similarly, the water flowing in the second heat exchanger releases heat to the second peltier device 27 and is cooled. Outdoor air or indoor air in the main portion 31 of the duct 15 is cooled by heat exchange with such cooled water.

The present invention is applicable to an air conditioner for use in an engine powered vehicle, a hybrid vehicle driven by an engine and an electric motor, and an electric vehicle driven by an electric motor.

A vehicle air conditioner for a passenger compartment includes a power source, a radiator provided outside the passenger compartment, a heat medium passage through which heat medium is circulated between the power source and the radiator, a first peltier module having a first peltier device and a first heat exchanger, and a second peltier module having a second peltier device and a second heat exchanger. The first and second peltier devices each has a first surface and a second surface, one of the first surface and the second surface serves to release heat, the other of the first surface and the second surface serves to absorb heat. The first heat exchanger is thermally coupled to the first surface. The second heat exchanger is thermally coupled to the first surface. The heat medium passage is thermally coupled to the second surfaces of the first and second peltier devices.

## Claims

1. A vehicle air conditioner for a passenger compartment of a vehicle, comprising:
a power source (3) for driving the vehicle;
a radiator (5) provided outside the passenger compartment;
a heat medium passage (7, 9) through which heat medium is circulated between the power source (3) and the radiator (5);
a first peltier module (11) having a first peltier device (17) and a first heat exchanger (19), the first peltier device (17) having a first surface (17A) and a second surface (17B), one of the first surface (17A) and the second surface (17B) serving to release heat, the other of the first surface (17A) and the second surface (17B) serving to absorb heat, the first heat exchanger (19) being thermally coupled to the first surface (17A); and
a second peltier module (13) having a second peltier device (27) and a second heat exchanger (29), the second peltier device (27) having a first surface (27A) and a second surface (27B), one of the first surface (27A) and the second surface (27B) serving to release heat, the other of the first surface (27A) and the second surface (27B) serving to absorb heat, the second heat exchanger (29) being thermally coupled to the first surface (27A),
**characterized in that** the heat medium passage (7, 9) is thermally coupled to the second surface (17B) of the first peltier device (17) and the second surface (27B) of the second peltier device (27).

2. The vehicle air conditioner according to claim 1, wherein the first surface (17A) of the first peltier device (17) serves to release heat and the second surface (17B) of the first peltier device (17) serves to absorb heat so that the first peltier module (11) provides heating of the passenger compartment, and the first surface (27A) of the second peltier device (27) serves to absorb heat and the second surface (27B) of the second peltier device (27) serves to release heat so that the second peltier module (13) provides cooling of the passenger compartment.

3. The vehicle air conditioner according to claim 2, wherein the second peltier module (13) is provided downstream of the first peltier module (11) as seen in heat medium flowing direction in the heat medium passage (7, 9).

4. The vehicle air conditioner according to claim 2 or claim 3, wherein the first peltier module (11) and the second peltier module (13) are provided in a duct (15) communicating with the passenger compartment, the duct (15) being provided with a selector (37) that allows selective supply of outdoor air or indoor air to the passenger compartment.
